# EUROPÄISCHE PATENTANMELDUNG

(11) **EP 2 311 316 A1**
(43) Veröffentlichungstag der Anmeldung: **20.04.2011**
(21) Anmeldenummer: 10008543.0
(22) Anmeldetag: 16.08.2010
(51) Int. Cl.: A01K 39/01

(54) **Vorrichtung zur Bereitstellung von Tiernahrung und Nahrungsbehälter**

(30) Priorität: 13.10.2009 DE 202009013837 U
(71) Anmelder: Optipack GmbH, 86850 Aretsried (DE)
(72) Erfinder: Pahlitzsch, Günther, 88471 Laupheim (DE); Leins, Michael, 87722 Markt Rettenbach (DE)
(74) Vertreter: Leinweber & Zimmermann

(57) **Zusammenfassung**

Vorrichtung zur Bereitstellung von Tiernahrung mit einem einen Speicherbereich (15) zur Aufnahme von Tiernahrung und einen Befestigungsbereich (14) aufweisenden Nahrungsbehälter und einem einen Nahrungsentnahmebereich (22) und einen Ankoppelbereich (24) zur Ankopplung des Nahrungsbehälters aufweisenden Behälter-Untergestell, wobei der Nahrungsbehälter in Form einer mit Tiernahrung gefüllten und mit einem öffenbaren Verschluss verschlossenen Einweg-Futterpackung ausgeführt ist, wobei durch Öffnen des Verschlusses eine Öffnung in dem Nahrungsbehälter freigegeben wird, durch die die Tiernahrung nach Ankopplung des Nahrungsbehälters an das Untergestell in den Nahrungsentnahmebereich gelangen kann.

## Beschreibung

Die Erfindung betrifft eine Vorrichtung zur Bereitstellung von Tiernahrung, insbesondere Vogelnahrung mit einem einen Speicherbereich zur Aufnahme von Tiernahrung und einen Befestigungsbereich aufweisenden Nahrungsbehälter und einem einen Nahrungsentnahmebereich und einen Ankoppelbereich zur Ankopplung des Nahrungsbehälters aufweisenden Behälter-Untergestell. Außerdem bezieht sich die Erfindung auf einen Nahrungsbehälter und ein Untergestell für eine solche Vorrichtung.

Derartige Vorrichtungen sind bekannt. Es handelt sich dabei um Tiernahrungsspender in Form von Wasser- oder Futterspendern, in denen der Großteil der Tiernahrung in einem geschlossenen Behälter befindlich ist, von dort aus in einen Nahrungsentnahmebereich gelangen und vom Tier dort entnommen werden kann. Als Behälter zur Aufnahme der Tiernahrung dienen üblicherweise Kunststoffbehälter, die vom Benutzer mit Tiernahrung befüllt werden und anschließend auf dem Behälter-Untergestell in einer Weise befestigt werden, daß sich der Speicherbereich des Nahrungsbehälters oberhalb des Untergestells befindet. So kann die Tiernahrung infolge der Schwerkraftwirkung in den Entnahmebereich gelangen und vom Tier dort entnommen werden. Es sind Nahrungsbehälter bekannt, die mit Flüssigkeit, insbesondere mit Wasser befüllt werden und mit einem Untergestell zur Bildung eines Wasserspenders verbunden werden, aber auch mit festem Tierfutter befüllbare Nahrungsbehälter, die nach Verbindung mit einem Untergestell einen Futterspender ergeben. Untergestelle für Wasserspender und Futterspender können in ihrem Aufbau voneinander abweichen, um der unterschiedlichen Konsistenz der jeweiligen Befüllung gerecht zu werden. So ist für einen Wasserspender ggf. eine dichtende Verbindung zwischen Untergestell und Nahrungsbehälter vonnöten.

Nahrungsbehälter bestehen üblicherweise zumindest teilweise aus transparentem Kunststoff, um den aktuellen Füllstand des Behälters von außen einsehen zu können und um einen sofortigen Sichteindruck über die Nahrungsqualität und über ggf. vorhandene Verunreinigungen in der Tiernahrung erhalten zu können. Üblicherweise sind Nahrungsbehälter etwa becherförmig aufgebaut, oder können, insbesondere wenn sie zu einem Futterspender gehören auch trichterförmig sein. Es hat sich bei der Verwendung bekannter Nahrungsbehälter herausgestellt, daß ein solcher becher- oder trichterförmiger Aufbau eine Reinigung des Nahrungsbehälters erschwert, da die Innenseiten der Behälterwand und des Behälterbodens mit Reinigungs- und Trocknungsutensilien nur schwer erreichbar sind. Dies macht eine Behälterreinigung umständlich und einen übermäßigen Aufwand erforderlich. Eine regelmäßige Reinigung des Behälters ist jedoch aus Hygienegründen notwendig, da sich Futterreste in Behälterwinkein oder -ecken festsetzen und verderben können, wenn sie bei Neubefüllungen des Behälters nicht durch Reinigung entfernt werden. Insbesondere bei Wasserbehältern aus transparentem Material ist eine regelmäßige Reinigung des Behälters auch aus ästhetischen Gründen unvermeidbar, da sich sonst unschöne Kalkränder oder Kalkreste an der Behälterinnenwand und in den Behälterecken festsetzen. Bei Verwendung eines transparenten Kunststoffbehälters über einen längeren Zeitraum wurde zusätzlich eine Trübung oder Gelbfärbung des Behälters beobachtet. Auch eine Verstopfung des Behälterausgangs infolge von Kalkablagerungen kann auftreten.

Angesichts dieser Probleme im Stand der Technik liegt der Erfindung die Aufgabe zugrunde, die Handhabung von Tiernahrungsspendern zu vereinfachen.

Erfindungsgemäß wird diese Aufgabe durch eine Weiterbildung eines bekannten Tiernahrungsspenders gelöst, die im wesentlichen dadurch gekennzeichnet ist, daß der Nahrungsbehälter in Form einer mit Tiernahrung gefüllten und mit einem öffenbaren Verschluß verschlossenen Einweg-Futterpackung ausgeführt ist, wobei durch Öffnen des Verschlusses eine Öffnung des Nahrungsbehälters freigegeben wird, durch die die Tiernahrung nach Ankopplung des Nahrungsbehälters an das Untergestell in den Nahrungsentnahmebereich gelangen kann.

Die Erfindung geht auf die verblüffend einfache Erkenntnis zurück, daß die beobachteten Mängel bekannter Nahrungsbehälter dadurch beseitigt werden, daß eine Reinigung des Nahrungsbehälters vollständig unnötig wird, wenn der Nahrungsbehälter nur zur einmaligen Befüllung mit Tiernahrung bestimmt ist. Nach Verbrauch der Nahrung durch Verzehr kann der Behälter entsorgt werden und ein neuer, mit Nahrung gefüllter Behälter verwendet werden. Dazu ist der Nahrungsbehälter mit einem Verschluß verschlossen, so daß er geöffnet werden kann und in Gebrauchsstellung in geöffnetem Zustand mit einem Untergestell zur Bildung eines Tiernahrungsspenders verbunden ist.

Durch die sterile Verpackung von Flüssigkeit oder Festnahrung in dem Nahrungsbehälter können so die oben beschriebenen, bei der Wiederverwendung von Nahrungsbehältern auftretenden Hygieneprobleme vollständig gelöst werden und das Verabreichen von hygienisch einwandfreier Nahrung gewährleistet werden. Ein in Form einer Einweg-Futterpackung ausgeführter Nahrungsbehälter kann dabei so gestaltet, bedruckt und/oder aufgemacht sein, daß ein ansprechender und ästhetisch angenehmer Eindruck entsteht, wobei gleichzeitig auf der Außenseite der Packung Werbefläche für Tiernahrungshersteller bereitgestellt werden kann.

Gemäß einem weiteren Aspekt der Erfindung ist bereits bei der Herstellung des Nahrungsbehälters die Zusetzung von weiteren Nährstoffen, besonderen Zusatzstoffen wie Vitaminen oder speziellen Geschmacksstoffen zur Tiernahrung möglich. So kann beispielsweise eine Einweg-Futterpackung auf die besonderen Bedürfnisse von Papageien abgestimmt sein, indem die Packung nicht nur Trinkwasser, sondern auch Vitamine und Nährstoffe in der für Papageien empfohlenen Dosierung enthält. Auch können der pH-Wert oder Kalkgehalt von Leitungswasser nicht immer mit den für besondere Tierarten empfohlenen Wasserwerten übereinstimmen. Spezielle Einweg-Wasserpackungen erlauben die Bereitstellung von optimalen, auf die Tierart abgestimmten Wasserqualitäten.

Erfindungsgemäß werden Nahrungsbehälter und Untergestell bevorzugt so miteinander verbunden, daß nach Ankopplung des Nahrungsbehälters an das Untergestell der Speicherbereich oberhalb des Untergestells angeordnet ist, so daß bei geöffnetem Verschluß Tiernahrung infolge Schwerkraftwirkung in den Nahrungsentnahmebereich gelangen kann.

Im Rahmen der Erfindung hat es sich dabei als besonders zweckmäßig herausgestellt, wenn der Nahrungsbehälter etwa becherförmig ist, wobei Becherwand und Becherboden und das von dem Becher umschlossene Volumen den Speicherbereich und ein dem Becherboden abgewandter Randbereich des Bechers den Befestigungsbereich bilden. Ein becherförmiger Behälter kann nämlich besonders einfach hergestellt und befüllt werden, wobei sich die Anbringung eines öffenbaren Verschlusses im Bereich der Becheröffnung als besonders einfach realisierbar herausgestellt hat. Der Querschnitt des Bechers in einer senkrecht zur Becherwand verlaufenden Ebene muß dabei nicht zwingend runde bzw. kreisförmige Gestalt haben. Vielmehr ist auch an eckige, beispielsweise quadratische oder dreieckige Becherquerschnitte oder an pyramidenartige Becherformen gedacht. Bevorzugt wird der Becher jedoch zumindest teilweise etwa kreiszylindrische und/oder kegelstumpfförmige Gestalt haben.

Ein Becher mit kegelstumpfmantelförmiger Becherwand, die sich vom Becherboden in Richtung dem Becherboden abgewandten Becherrand verbreitert, bietet den zusätzlichen Vorteil, daß eine Reinigung des Nachfüllbehälters leichter durchführbar ist als bei einer kreiszylindermantelförmigen Becherwand. Eine Reinigung und Wiederverwendung eines Einweg-Nahrungsbehälters kann beispielsweise nötig werden, falls der Tierhalter gerade keine Nachfüllpackung vorrätig und in Reichweite hat. Jedenfalls ist die Nachbefüllung eines bereits geöffneten Einweg-Nahrungsbehälters mit Tiernahrung und die damit verbundene mehrfache Verwendung desselben Einwegnahrungsbehälters erfindungsgemäß möglich.

In einer bevorzugten Ausführungsform weist der Verschluß eine den Nahrungsbehälter versiegelnde Folie auf, die zum Öffnen des Nahrungsbehälters abgezogen oder durchstochen werden kann. Wenn der Nahrungsbehälter becherförmig ist, kann die Folie auf besonders einfache Weise die Becheröffnung verschließen und dabei gleichzeitig versiegeln, wobei die Versiegelung vom Haustierhalter vor Ankopplung des Behälters an das Untergestell durch Abziehen der Folie erbrochen wird und der Behälter damit gleichzeitig geöffnet wird. Es ist weiterhin auch daran gedacht, daß der Nahrungsbehälter geöffnet wird, indem die Folie beim Verbinden von Untergestell und Nahrungsbehälter von einer Schneid-oder Stechvorrichtung des Untergestells durchstochen wird, so daß kein "aktives" Abziehen der Folie durch den Benutzer vonnöten ist.

Konstruktiv hat es sich als besonders zweckmäßig erwiesen, wenn der Befestigungsbereich eine etwa ringförmige Dichtfläche zur Auflage auf einer etwa ringförmigen Ankoppelfläche des Ankoppelbereichs aufweist. Bei einem becherförmigen Nahrungsbehälter kann dabei die Dichtfläche in Form einer dem Becherboden abgewandten Becherrandfläche gebildet sein. Auch kann die Dichtfläche erst durch das Abziehen einer den Nahrungsbehälter verschließenden Folie freigelegt werden.

Vor allem wenn die Vorrichtung als Wasserspender genutzt werden soll, ist die dichte, insbesondere wasserdichte Verbindung von Nahrungsbehälter und Untergestell vonnöten, um ein Auslaufen von Flüssigkeit zu verhindern. Insbesondere soll die den Behälter füllende Flüssigkeit nur auf einem dazu vorgesehenen Weg in den Nahrungsentnahmebereich gelangen. Eine luftdichte Verbindung kann außerdem bei bestimmten Füllständen vonnöten sein, um das Eindringen von Luft in den Behälter und das damit verbundene Auslaufen des Behälters, bzw. Überlaufen der den Nahrungsentnahmebereich befüllenden Flüssigkeit aufgrund einer Verminderung des im Behälter wirkenden Unterdrucks zu verhindern. Die Dichtheit der Verbindung über einen Umlaufwinkel größer als 300°, bevorzugt größer als 330° wird bevorzugt durch das Wirken eines Dichtrings zwischen Ankoppelfläche und Dichtfläche gewährleistet. Der Dichtring kann dabei über einen Umlaufwinkel größer als 300°, bevorzugt größer als 330° in einer etwa kreisförmigen Nut in der Ankoppelfläche zumindest teilweise aufgenommen sein. Durch Auflage, insbesondere durch Aufdrücken oder Aufpressen der Dichtfläche auf den zumindest teilweise in der Nut der Ankoppelfläche befindlichen Dichtring wird so eine wasserdichte Verbindung hergestellt. In einer bevorzugten Ausführungsform eines Wasserspenders ist dabei der Dichtring über einen Umlaufwinkel größer als 330°, jedoch kleiner als 360° zumindest teilweise in einer in der Ankoppelfläche gebildeten Nut aufgenommen. Die Ankoppelfläche weist an einer Stelle einen Durchlaß auf, durch den die Flüssigkeit unter dem Dichtring hindurch in den Entnahmebereich gelangen kann.' Die Verbindung ist also gerade an dieser zum Entnahmebereich führenden Durchlaßstelle undicht ausgeführt, wodurch die Flüssigkeit infolge der Schwerkraftwirkung den Entnahmebereich befüllen kann, bis bei Erreichen eines der Höhe des Durchlasses entsprechenden Wasserspiegels ein weiteres Eindringen von Luft in den Behälter durch den Durchlaß nicht möglich ist und infolge des im Behälter dann entstehenden Unterdrucks ein weiteres Einlaufen der Flüssigkeit in den Entnahmebereich verhindert wird.

Bevorzugt weisen Befestigungsbereich und Ankoppelbereich männliche und/oder weibliche Elemente eines Klippverschlusses auf, die der Form und/oder kraftschlüssigen Verbindung des Nahrungsbehälters mit dem Untergestell dienen. Der Nahrungsbehälter kann so auf einfache und praktische Art und Weise durch "Aufklippsen" auf dem Untergestell befestigt werden. Dadurch greifen die Klippverschlußelemente des Befestigungsbereichs in diejenigen des Ankoppelbereichs ein. Die Entkopplung von Nahrungsbehälter und Untergestell kann durch einfache Krafteinwirkung auf die verkoppelten Klippverschlußelemente erfolgen. Durch den Klippverschluß kann weiter ein Andrücken der Dichtfläche an die Ankoppelfläche oder an einen zwischen Dichtfläche und Ankoppelfläche wirkenden Dichtring und somit die Dichtheit der Verbindung unterstützt werden.

Insbesondere wenn der Nahrungsbehälter becherförmige Gestalt hat, kann der Befestigungsbereich ein Klippverschlußelement in Form eines den Nahrungsbehälter etwa ringförmig umlaufenden Flansches aufweisen. In diesem Fall kann nämlich der radial nach außen abstehende und so einen Flansch bildende Becherrand als Klippverschlußelement genutzt werden, der durch einfache Druckausübung in im Ankoppelbereich vorhandene Eingreifelemente "eingeklippst" werden kann. Die dem Becherboden abgewandte Seite des Becherrandes kann so die Dichtfläche bilden und die dem Becherboden zugewandte Rückseite des Becherrandes mit Eingreifelementen des Ankoppelbereichs zur Bildung eines Klippverschlusses zusammenwirken. Auf diese Weise kann die Herstellung eines Einweg-Nahrungsbehälters vereinfacht werden und kostengünstiger erfolgen.

Vorzugsweise weist der Ankoppelbereich mehrere Klippverschlußelemente mit jeweils einer Führungsfläche und einem Arretierbereich auf, so daß ein in Form eines ringförmigen Flansches gebildetes Klippverschlußelement des Nahrungsbehälters bei Ankopplung an das Untergestell zunächst an den Führungsflächen entlanggleiten und anschließend in Arretierungsstellung gelangen kann, in der der Flansch an den Arretierbereichen anliegt.

Wie bereits beschrieben, hat in einer Ausführungsform die Tiehrnahrung flüssige Konsistenz und besteht insbesondere zumindest teilweise aus Wasser. In einer anderen Ausführungsform hat die Tiernahrung feste Konsistenz und besteht bevorzugt aus Tierfutter, insbesondere aus Vogelfutter. Es sind aber auch Ausführungsformen denkbar, in denen sowohl mit flüssiger Tiernahrung befüllte Nahrungsbehälter als auch mit fester Tiernahrung befüllte Behälter an dasselbe Untergestell angekoppelt werden können. Bevorzugt ist jedoch das Untergestell einer erfindungsgemäßen Vorrichtung an die Konsistenz der Tiernahrung eines zugehörigen Nahrungsbehälters angepaßt. So ist beispielsweise bei einem Futterspender im Gegensatz zum Wasserspender keine zumindest teilweise luft und/oder wasserdichte Verbindung zwischen Untergestell und Nahrungsbehälter vonnöten. Auch können die Zuführung der Nahrung zum Entnahmebereich und/oder der Aufbau des Entnahmebereichs je nach Konsistenz der Nahrung unterschiedlich gestaltet sein.

Der Verschluß eines mit Tiernahrung flüssiger Konsistenz gefüllten Nahrungsbehälters verschließt den Behälter vorzugsweise dicht, insbesondere wasserdicht, um ein Auslaufen des Behälters in geschlossenem Zustand zu verhindern. Es hat sich außerdem vor allem in diesem Fall als zweckmäßig erwiesen, wenn der Nahrungsbehälter zumindest teilweise aus wasserundurchlässigem Material besteht. So kann ein mit Wasser gefüllter Behälter beispielsweise zumindest teilweise aus Kunststoff und/oder vorzugsweise beschichtetem Karton oder Papier bestehen. Es ist weiter denkbar, einen Teil des Nahrungsbehälters aus transparentem Kunststoff oder anderen transparenten Materialien zu fertigen, um den Füllstand des Behälters sofort von außen einsehen zu können. Mit Tierfutter fester Konsistenz gefüllte Behälter können auch aus Karton oder festem Papier bestehen, wobei die Behälterwand Sichtlöcher und/oder Ausnehmungen enthalten kann, um dem Benutzer einen Sichteindruck bezüglich Futterquantität und/oder Futterqualität zu ermöglichen.

In einer besonders bevorzugten Ausführungsform einer erfindungsgemäßen Vorrichtung weist das Untergestell einen Zuleitungsbereich mit einer Abschrägung und/oder Rundung auf, die nach Ankopplung an den Nahrungsbehälter eine Zuleitung der Tiernahrung vom Speicherbereich zum Entnahmebereich infolge der Schwerkraftwirkung unterstützt. So kann beispielsweise der in Gebrauchsstellung eines Nahrungsspenders die Auflagefläche der Tiernahrung bildende Züleitungsbereich des Untergestells in zum Entnahmebereich weisender Richtung derart abgeschrägt oder abgerundet sein, daß der tiefliegende Bereich der Auflagefläche an den Entnahmebereich angrenzt. Auf diese Weise kann sichergestellt werden, daß die Tiernahrung infolge Schwerkraftwirkung vollständig in den Entnahmebereich gelangt und keine Nahrungsreste im Speicherbereich oder anderen für das Tier unzugänglichen Bereichen der Vorrichtung verbleiben.

Im Rahmen der Erfindung hat es sich weiter als besonders zweckmäßig erwiesen, wenn das Untergestell Befestigungselemente zum Anbringen der Vorrichtung an einer Stange, insbesondere einer Stange eines Vogelkäfiggitters aufweist. Beispielsweise kann das Untergestell hakenartige Befestigungselemente zum Einhängen der Vorrichtung an der Stange eines Vogelkäfiggitters aufweisen. Denkbar sind auch Klemmplatten, zwischen die eine Gitterstange zur Befestigung der Vorrichtung an einem Gitter einklemmbar ist.

Vorzugsweise weist das Untergestell eine Druckplatte auf, die nach Anbringen der Vorrichtung an einem Käfig infolge der Gewichtskraft der Vorrichtung auftretende Kräfte und/oder Momente auf eine Gegendruckfläche des Käfigs überträgt.

Eine erfindungsgemäße Vorrichtung wird vorzugsweise in Gebrauchsstellung gebracht, indem ein in Form einer mit Nahrung gefüllten Einweg-Futterpackung ausgeführter Nahrungsbehälter geöffnet und mit einem Untergestell in einer Weise verbunden wird, daß der Nahrungsbehälter oberhalb des Untergestells befindlich ist, so daß die Tiernahrung infolge Schwerkraftwirkung in den Nahrungsentnahmebereich gelangen kann.

Der Nahrungsbehälter kann geöffnet werden, indem ein den Nahrungsbehälter verschließender und/oder versiegelnder Verschluß entfernt wird.

Vorzugsweise weist der Nahrungsbehälter einen Verschluß mit einer Folie, insbesondere einer Aluminiumfolie auf, die zum Öffnen des Nahrungsbehälters abgezogen oder durchstochen wird.

Es ist weiter daran gedacht, daß der Nahrungsbehälter geöffnet wird, indem die Folie beim Verbinden von Untergestell und Nahrungsbehälter von einer Schneid- oder Stechvorrichtung des Untergestells durchstochen wird.

Eine erfindungsgemäße Vorrichtung kann auch in Gebrauchsstellung gebracht werden, indem ein verschlossener, mit einem Untergestell verbundener Nahrungsbehälter zunächst vom Untergestell abgenommen wird, geöffnet wird und anschließend wieder mit dem Untergestell verbunden wird, woraufhin die Nahrung durch die freigegebene Öffnung in den Nahrungsentnahmebereich gelangen kann.

In der folgenden Beschreibung wird die Erfindung unter Bezugnahme auf die Zeichnung beispielhaft erläutert. In der Zeichnung zeigt:
- Fig. 1: eine perspektivische Ansicht einer ersten Ausführungsform einer erfindungsgemäßen Vorrichtung im Gebrauchszustand,
- Fig. 2: eine Schnittzeichnung der ersten Ausführungsform,
- Fig. 3: eine perspektivische Ansicht eines zu der ersten Ausführungsform der Vorrichtung gehörenden Untergestells,
- Fig. 4: eine zweite Ausführungsform einer erfindungsgemäßen Vorrichtung in einer Schnittzeichnung,
- Fig. 5: eine perspektivische Ansicht eines zu der zweiten Ausführungsform gehörenden Untergestells.

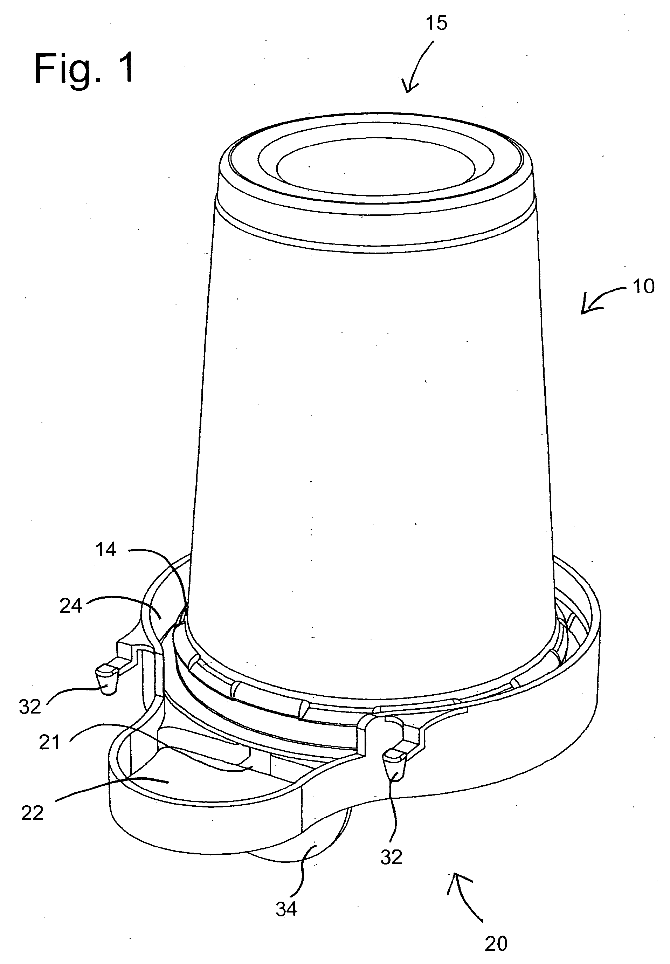

Fig. 1 zeigt in einer perspektivischen Darstellung eine erste Ausführungsform einer erfindungsgemäßen Vorrichtung im Gebrauchszustand. Diese Ausführungsform wird im folgenden als "Wasserspender" bezeichnet und ist vor allem auf das Spenden von Tiernahrung flüssiger Konsistenz hin optimiert. Der becherförmige Nahrungsbehälter (10) und das Untergestell (20) sind über den Ankoppelbereich (14) des Nahrungsbehälters und den Befestigungsbereich (24) des Untergestells miteinander verkoppelt, wobei der Speicherbereich (15) des Nahrungsbehälters oberhalb des Untergestells (20) angeordnet ist, so daß infolge der Schwerkraftwirkung Flüssigkeit durch den Durchlaß (21) in den Nahrungsentnahmebereich (22) des Untergestells gelangen kann. Hakenartige Befestigungselemente (32) dienen der Befestigung des Wasserspenders an einer Stange eines Käfiggitters, wobei eine Druckplatte (34) Kräfte und/oder Momente auf eine Gegendruckfläche des Käfigs (nicht gezeigt) überträgt.

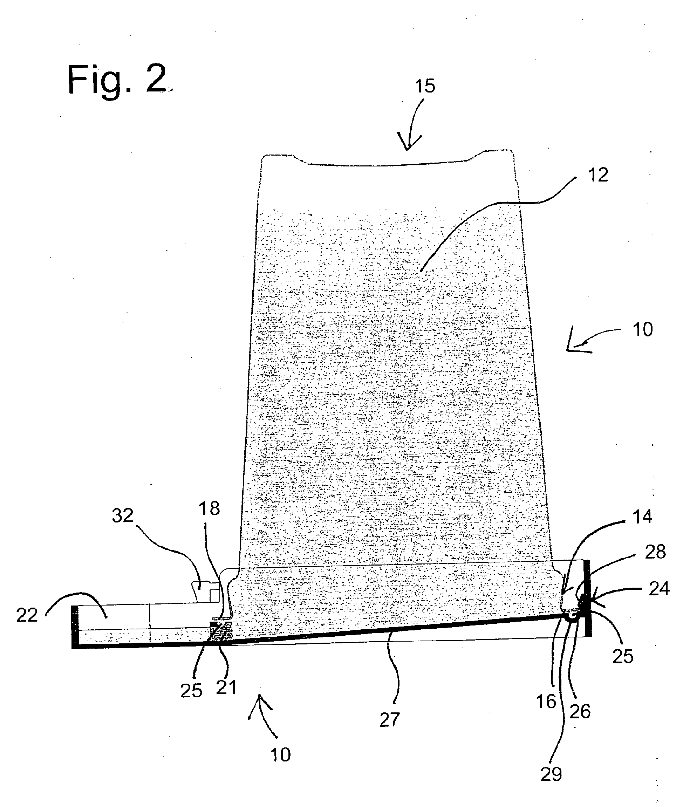

Fig. 2 zeigt den Wasserspender in einer durch den Entnahmebereich (22) verlaufenden vertikalen Schnittebene. Der Speicherbereich (15) des Nahrungsbehälters ist mit Flüssigkeit (12; grau hinterlegt) gefüllt, wobei der Nahrungsbehälter geöffnet ist, so daß Flüssigkeit durch den Durchlaß (21) in den Entnahmebereich (22) gelangen kann. Der Zuleitungsbereich des Untergestells (27) weist eine Abschrägung auf, so daß eine Zuleitung der Flüssigkeit vom Speicherbereich (15) zum Entnahmebereich (22) infolge Schwerkraftwirkung unterstützt wird.

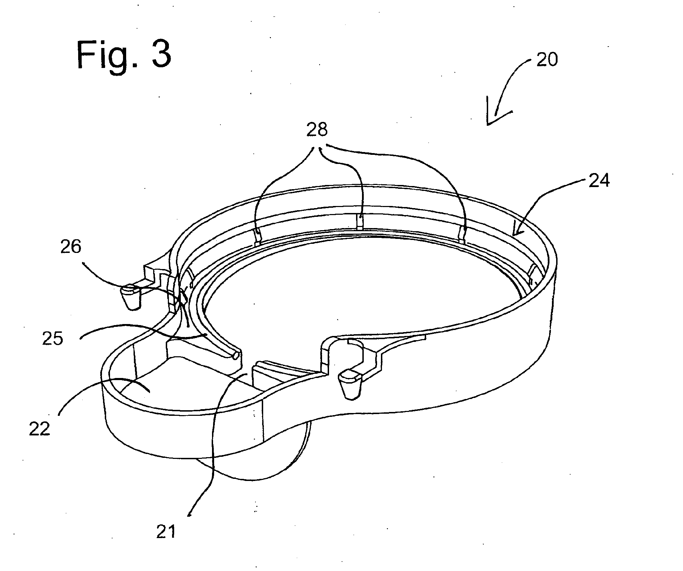

Zwischen Ankoppelfläche (16) und Befestigungsfläche (26) wirkt ein Dichtring (25), der teilweise in einer in der Ankoppelfläche gebildeten Nut (29) aufgenommen ist. Wie Fig. 3 zu entnehmen ist, kann Flüssigkeit im Bereich des Durchlasses (21) unter dem Dichtring (25) hindurch in den Entnahmebereich gelangen. Der Dichtring ist in Fig. 3 nur zwecks besserer Übersichtlichkeit im Bereich des Durchlasses (21) unterbrochen dargestellt. Im Befestigungsbereich (24) des Untergestells befinden sich Klippverschlußelemente (28), die zusammen mit dem Becherrand (18) einen Klippverschluß bilden.

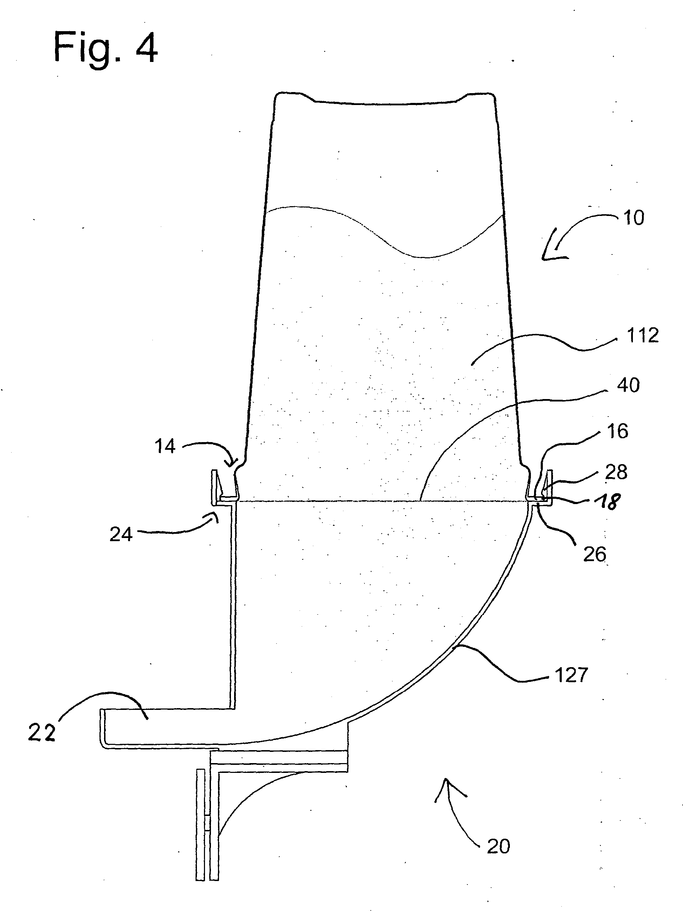

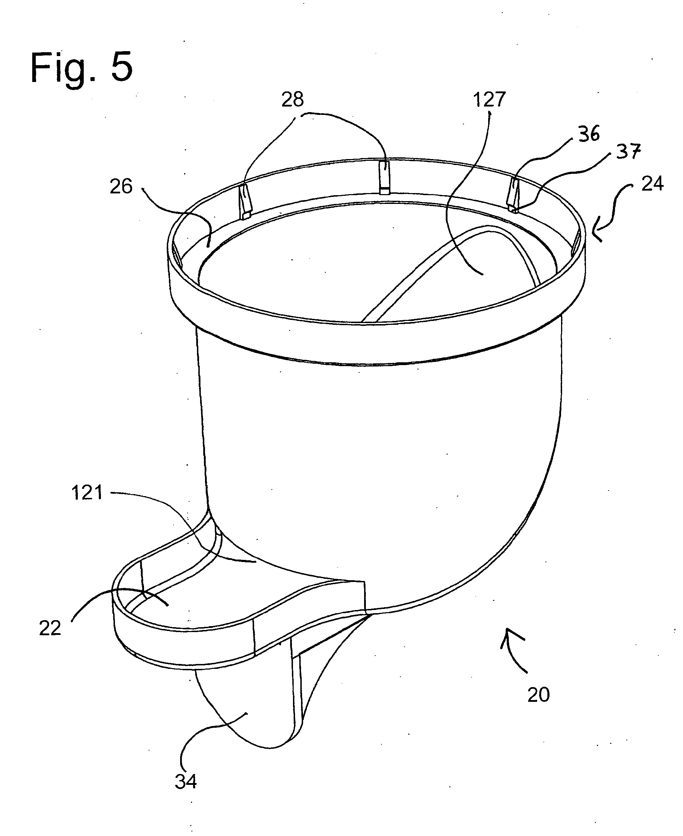

In den Figuren 4 und 5 ist eine weitere Ausführungsform einer erfindungsgemäßen Vorrichtung gezeigt. Diese Ausführungsform wird als "Futterspender" bezeichnet und ist vor allem auf das Spenden von Tiernahrung fester Konsistenz hin optimiert. Mit der erstem Ausführungsform übereinstimmende Merkmale sind mit denselben Bezugszeichen versehen.

Der Futterspender unterscheidet sich vom Wasserspender zunächst dadurch, daß die Verbindung zwischen Untergestell und Nahrungsbehälter nicht wasserdicht ausgeführt und daß insbesondere kein Dichtring vorhanden ist (siehe Fig. 5). Die Ankoppelfläche (16) des Untergestells ist ringförmig ausgebildet und weist keinen Durchlaß auf. Die Tiernahrung gelangt über einen im Untergestell gebildeten Durchlaß (121) in den Entnahmebereich (22). Der Zuleitungsbereich des Untergestells weist eine Rundung (127) auf, so daß eine Zuleitung der Tiernahrung vom Speicherbereich (15) zum Entnahmebereich (22) infolge Schwerkraftwirkung unterstützt wird. Der Nahrungsbehälter ist geöffnet, so daß die Tiernahrung (112; grau hinterlegt) in den Entnahmebereich gelangen kann. Im Befestigungsbereich des Untergestells befinden sich jeweils eine Führungsfläche (36) und einen Arretierbereich (37) aufweisende Klippverschlußelemente (28), die zusammen mit dem. Becherrand (18) einen Klippverschluß bilden.

Die Position einer den Nahrungsbehälter vor Öffnung desselben verschließenden Folie, insbesondere einer Aluminiumfolie, ist mit Hilfe einer grauen Linie markiert und mit Bezugszeichen 40 versehen.

Eine erfindungsgemäße Vorrichtung ist nicht auf die beschriebenen Ausführungsformen beschränkt. Vielmehr ist es für den Fachmann offensichtlich, daß andersgeformte und/oder auf andere Weise mit einem Untergestell verbundene Nahrungsbehälter ebenso denkbar sind. Ebenso kann die Vorrichtung auf andere Weise an einem Käfig oder an/auf einer sonstigen Unterlage und/oder Halterung befestigt sein oder abgestellt werden.

Insbesondere können Futterspender und Wasserspender auf ein und demselben Befestigungsträger installiert sein.

## Patentansprüche

1. Vorrichtung zur Bereitstellung von Tiernahrung mit einem einen Speicherbereich (15) zur Aufnahme von Tiernahrung und einen Befestigungsbereich (14) aufweisenden Nahrungsbehälter (10) und einem einen Nahrungsentnahmebereich (22) und einen Ankoppelbereich (24) zur Ankopplung des Nahrungsbehälters aufweisenden Behälter-Untergestell (20), **dadurch gekennzeichnet, dass** der Nahrungsbehälter in Form einer mit Tiernahrung gefüllten und mit einem öffenbaren Verschluss verschlossenen Einweg-Futterpackung ausgeführt ist, wobei durch Öffnen des Verschlusses eine Öffnung in dem Nahrungsbehälter freigegeben wird, durch die die Tiernahrung nach Ankopplung des Nahrungsbehälters an das Untergestell in den Nahrungsentnahmebereich gelangen kann.

2. Vorrichtung nach Anspruch 1, **dadurch gekennzeichnet, dass** der Speicherbereich (15) des Nahrungsbehälters (10) nach Ankopplung an das Untergestell (20) oberhalb des Untergestells angeordnet ist, so dass bei geöffnetem Verschluss Tiernahrung infolge Schwerkraftwirkung in den Nahrungsentnahmebereich (22) gelangen kann.

3. Vorrichtung nach einem der vorangehenden Ansprüche, **dadurch gekennzeichnet, dass** der Nahrungsbehälter etwa becherförmig ist, wobei Becherwand und Becherboden und das von dem Becher umschlossene Volumen den Speicherbereich (15) und ein dem Becherboden abgewandter Randbereich des Bechers den Befestigungsbereich (14) bilden.

4. Vorrichtung nach einem der vorangehenden Ansprüche, **dadurch gekennzeichnet, dass** der Verschluss eine den Nahrungsbehälter versiegelnde Folie (40) aufweist, die zum Öffnen des Nahrungsbehälters abgezogen oder durchstochen werden kann.

5. Vorrichtung nach einem der vorangehenden Ansprüche, **dadurch gekennzeichnet, dass** der Befestigungsbereich (14) eine etwa ringförmige Dichtfläche (16) zur Auflage auf einer etwa ringförmigen Ankoppelfläche (26) des Ankoppelbereichs (24) aufweist.

6. Vorrichtung nach Anspruch 5, **dadurch gekennzeichnet, dass** die Verbindung zwischen Untergestell und Nahrungsbehälter durch Wirken eines Dichtrings (25) zwischen Ankoppelfläche (26) und Dichtfläche (16) über einen Umlaufwinkel größer als 300°, bevorzugt größer als 330° dicht, insbesondere wasserdicht ausgeführt ist.

7. Vorrichtung nach Anspruch 6, **dadurch gekennzeichnet, dass** der Dichtring über einen Umlaufwinkel größer als 300°, bevorzugt größer als 330° in einer etwa kreisförmigen Nut (29) in der Ankoppelfläche (26) zumindest teilweise aufgenommen ist.

8. Vorrichtung nach einem der vorangehenden Ansprüche, **dadurch gekennzeichnet, dass** der Befestigungsbereich des Nahrungsbehälters und der Ankoppelbereich des Untergestells männliche und/oder weibliche Elemente eines Klippverschlusses (18, 28) aufweisen, die der form- und/oder kraftschlüssigen Verbindung des Nahrungsbehälters mit dem Untergestell dienen.

9. Vorrichtung nach Anspruch 8, **dadurch gekennzeichnet, dass** der Befestigungsbereich (14) ein Klippverschlusselement in Form eines den Nahrungsbehälter etwa ringförmig umlaufenden Flansches (18) aufweist.

10. Vorrichtung nach Anspruch 9, **dadurch gekennzeichnet, dass** der Ankoppelbereich (24) jeweils eine Führungsfläche (36) und einen Arretierbereich (37) aufweisende Klippverschlusselemerite (28) aufweist, in die ein in Form eines ringförmigen Flansches gebildetes Klippverschlusselement des Nahrungsbehälters einrastbar ist.

11. Vorrichtung nach einem der vorangehenden Ansprüche, **dadurch gekennzeichnet, dass** die Tiernahrung flüssige Konsistenz hat, insbesondere Wasser (12) aufweist.

12. Vorrichtung nach einem der Ansprüche 1 bis 10, **dadurch gekennzeichnet, dass** die Tiernahrung feste Konsistenz hat, bevorzugt Tierfutter (112), insbesondere Vogelfutter aufweist.

13. Vorrichtung nach einem der vorangehenden Ansprüche, **dadurch gekennzeichnet, dass** der öffenbare Verschluss den Nahrungsbehälter dicht, insbesondere wasserdicht verschließt.

14. Vorrichtung nach einem der vorangehenden Ansprüche, **dadurch gekennzeichnet, dass** der Nahrungsbehälter zumindest teilweise aus wasserundurchlässigem Material besteht.

15. Vorrichtung nach einem der vorangehenden Ansprüche, **dadurch gekennzeichnet, dass** der Nahrungsbehälter zumindest teilweise aus Kunststoff und/oder vorzugsweise beschichtetem Karton besteht.

16. Vorrichtung nach einem der vorangehenden Ansprüche, **dadurch gekennzeichnet, dass** das Untergestell einen Zuleitungsbereich mit einer Abschrägung und/oder Rundung (27, 127) aufweist, die nach Ankopplung des Untergestells an den Nahrungsbehälter eine Zuleitung der Tiernahrung vom Speicherbereich (15) zum Entnahmebereich (22) infolge der Schwerkraftwirkung unterstützt.

17. Vorrichtung nach einem der vorangehenden Ansprüche, **dadurch gekennzeichnet, dass** das Untergestell Befestigungselemente zum Anbringen der Vorrichtung an einer Stange, insbesondere einer Stange eines Vogelkäfiggitters aufweist.

18. Vorrichtung nach Anspruch 17, **dadurch gekennzeichnet, dass** die Befestigungselemente (32) hakenartig sind oder in Form von Klemmplatten (33) gebildet sind.

19. Vorrichtung nach einem der vorangehenden Ansprüche, **dadurch gekennzeichnet, dass** das Untergestell eine Druckplatte (34) aufweist, die nach Anbringen der Vorrichtung an einem Käfig infolge der Gewichtskraft der Vorrichtung auftretende Kräfte und/oder Momente auf eine Gegendruckfläche des Käfigs überträgt.

20. Nahrungsbehälter für eine Vorrichtung nach einem der vorangehenden Ansprüche, **dadurch gekennzeichnet, dass** der Nahrungsbehälter in Form einer mit Tiernahrung gefüllten und mit einem öffenbaren Verschluss verschlossenen Einweg-Futterpackung ausgeführt ist.

21. Untergestell für eine Vorrichtung nach einem der Ansprüche 1 bis 19.

## Geänderte Patentansprüche

### Geänderte Patentansprüche gemäss Regel 137(2) EPÜ.

**1.** Vorrichtung zur Bereitstellung von Tiernahrung mit einem einen Speicherbereich (15) zur Aufnahme von Tiernahrung und einen Befestigungsbereich (14) aufweisenden Nahrungsbehälter (10) und einem einen Nahrungsentnahmebereich (22) und einen Ankoppelbereich (24) zur Ankopplung des Nahrungsbehälters aufweisenden Behälter-Untergestell (20), wobei der Nahrungsbehälter in Form einer mit Tiernahrung gefüllten und mit einem öffenbaren Verschluss verschlossenen Einweg-Futterpackung ausgeführt ist, und durch Öffnen des Verschlusses eine Öffnung in dem Nahrungsbehälter freigegeben wird, durch die die Tiernahrung nach Ankopplung des Nahrungsbehälters an das Untergestell in den Nahrungsentnahmebereich gelangen kann, **dadurch gekennzeichnet, dass** der Nahrungsbehälter becherförmig ist und der Verschluss eine die Becheröffnung versiegelnde Folie (40) aufweist, die zum Öffnen des Nahrungsbehälters abgezogen oder durchstochen werden kann.

**2.** Vorrichtung nach Anspruch 1, **dadurch gekennzeichnet, dass** der Speicherbereich (15) des Nahrungsbehälters (10) nach Ankopplung an das Untergestell (20) oberhalb des Untergestells angeordnet ist, so dass bei geöffnetem Verschluss Tiernahrung infolge Schwerkraftwirkung in den Nahrungsentnahmebereich (22) gelangen kann

**3.** Vorrichtung nach einem der vorangehenden Ansprüche, **dadurch gekennzeichnet, dass** eine Becherwand und ein Becherboden und ein von dem Becher umschlossenes Volumen den Speicherbereich (15) und ein dem Becherboden abgewandter Randbereich des Bechers den Befestigungsbereich (14) bilden.

**4.** Vorrichtung nach einem der vorangehenden Ansprüche, **dadurch gekennzeichnet, dass** der Befestigungsbereich (14) eine etwa ringförmige Dichtfläche (16) zur Auflage auf einer etwa ringförmigen Ankoppelfläche (26) des Ankoppelbereichs (24) aufweist.

**5.** Vorrichtung nach Anspruch 4, **dadurch gekennzeichnet, dass** die Verbindung zwischen Untergestell und Nahrungsbehälter durch Wirken eines Dichtrings (25) zwischen Ankoppelfläche (26) und Dichtfläche (16) über einen Umlaufwinkel größer als 300°, bevorzugt größer als 330° dicht, insbesondere wasserdicht ausgeführt ist.

**6.** Vorrichtung nach Anspruch 5, **dadurch gekennzeichnet, dass** der Dichtring über einen Umlaufwinkel größer als 300°, bevorzugt größer als 330° in einer etwa kreisförmigen Nut (29) in der Ankoppelfläche (26) zumindest teilweise aufgenommen ist.

**7.** Vorrichtung nach einem der vorangehenden Ansprüche, **dadurch gekennzeichnet, dass** der Befestigungsbereich des Nahrungsbehälters und der Ankoppelbereich des Untergestells männliche und/oder weibliche Elemente eines Klippverschlusses (18, 28) aufweisen, die der form- und/oder kraftschlüssigen Verbindung des Nahrungsbehälters mit dem Untergestell dienen.

**8.** Vorrichtung nach Anspruch 7, **dadurch gekennzeichnet, dass** der Befestigungsbereich (14) ein Klippverschlusselement in Form eines den Nahrungsbehälter etwa ringförmig umlaufenden Flansches (18) aufweist.

**9.** Vorrichtung nach Anspruch 8, **dadurch gekennzeichnet, dass** der Ankoppelbereich (24) jeweils eine Führungsfläche (36) und einen Arretierbereich (37) aufweisende Klippverschlusselemente (218) aufweist, in die ein in Form eines ringförmigen Flansches gebildetes Klippverschlusselement des Nahrungsbehälters einrastbar ist.

**10.** Vorrichtung nach einem der vorangehenden Ansprüche, **dadurch gekennzeichnet, dass** die Tiernahrung flüssige Konsistenz hat, insbesondere Wasser (12) aufweist.

**11.** Vorrichtung nach einem der Ansprüche 1 bis 9, **dadurch gekennzeichnet, dass** die Tiernahrung feste Konsistenz hat, bevorzugt Tierfutter (112), insbesondere Vogelfutter aufweist.

**12.** Vorrichtung nach einem der vorangehenden Ansprüche, **dadurch gekennzeichnet, dass** der öffenbare Verschluss den Nahrungsbehälter dicht, insbesondere wasserdicht verschließt.

**13.** Vorrichtung nach einem der vorangehenden Ansprüche, **dadurch gekennzeichnet, dass** der Nahrungsbehälter zumindest teilweise aus wasserundurchlässigem Material besteht.

**14.** Vorrichtung nach einem der vorangehenden Ansprüche, **dadurch gekennzeichnet, dass** der Nahrungsbehälter zumindest teilweise aus Kunststoff und/oder vorzugsweise beschichtetem Karton besteht.

**15.** Vorrichtung nach einem der vorangehenden Ansprüche, **dadurch gekennzeichnet, dass** das Untergestell einen Zuleitungsbereich mit einer Abschrägung und/oder Rundung (27, 127) aufweist, die nach Ankopplung des Untergestells an den Nahrungsbehälter eine Zuleitung der Tiernahrung vom Speicherbereich (15) zum Entnahmebereich (22) infolge der Schwerkraftwirkung unterstützt.

**16.** Vorrichtung nach einem der vorangehenden Ansprüche, **dadurch gekennzeichnet, dass** das Untergestell Befestigungselemente zum Anbringen der Vorrichtung an einer Stange, insbesondere einer Stange eines Vogelkäfiggitters aufweist.

**17.** Vorrichtung nach Anspruch 16, **dadurch gekennzeichnet, dass** die Befestigungselemente (32) hakenartig sind oder in Form von Klemmplatten (33) gebildet sind.

**18.** Vorrichtung nach einem der vorangehenden Ansprüche, **dadurch gekennzeichnet, dass** das Untergestell eine Druckplatte (34) aufweist, die nach Anbringen der Vorrichtung an einem Käfig infolge der Gewichtskraft der Vorrichtung auftretende Kräfte und/oder Momente auf eine Gegendruckfläche des Käfigs überträgt.

**19.** Nahrungsbehälter für eine Vorrichtung nach einem der vorangehenden Ansprüche.
